# EUROPÄISCHE PATENTSCHRIFT

(11) **EP 1 855 919 B1**
(45) Veröffentlichungstag und Bekanntmachung des Hinweises auf die Patenterteilung: **03.11.2010**
(21) Anmeldenummer: 06707151.4
(22) Anmeldetag: 22.02.2006
(51) Int. Cl.: B60R 21/231

(54) **ROHRFÖRMIGES GASLEITELEMENT, GASERZEUGUNGS- UND ZUFÜHREINHEIT UND VORHANGGASSACK-EINHEIT**
TUBULAR GAS GUIDING ELEMENT, A GAS GENERATING AND SUPPLYING UNIT AND A SUSPENDED GASBAG UNIT
ELEMENT TUBULAIRE DE CONDUITE D'ALIMENTATION EN GAZ ET UNITE D'ALIMENTATION ET UNITE DE SAC GONFLABLE SUSPENDU

(30) Priorität: 02.03.2005 DE 102005009433; 02.03.2005 DE 102005009432
(43) Veröffentlichungstag der Anmeldung: 21.11.2007
(73) Patentinhaber: Autoliv Development AB, 44783 Vargarda (SE)
(72) Erfinder: BROUGH, Matthew 93a Ford Green Road Smallthorne, Staffordshire ST6 1HN (GB); MCGREGOR, Douglas, Haslington CW1 5WF (GB); JACONELLI, Hakan, S-441 39 Alingsas (SE); BRADBURN, Alan, Stoke-on-Trent, Staffordshire (GB)
(74) Vertreter: Schön, Thilo
(86) Internationale Anmeldenummer: PCT/EP2006/001584
(87) Internationale Veröffentlichungsnummer: WO 2006/092226

(56) Entgegenhaltungen:
- WO-A-02/079008
- FR-A- 2 855 125
- JP-A- 2002 187 519
- US-A1- 2003 094 799
- US-A1- 2003 146 608

## Beschreibung

### Technisches Gebiet der Erfindung

Die Erfindung betrifft ein rohrförmiges Gasleitelement nach Anspruch 1, eine Gaserzeugungs- und Zuführeinheit nach Anspruch 11 und eine Vorhanggassack-Einheit nach dem Oberbegriff des Anspruchs 12.

In der Kraftfahrzeugtechnik sind sogenannte Vorhanggassäcke bekannt. Diese sind im Bereich des Dachholms eines Kraftfahrzeuges angeordnet und expandieren im Bedarfsfall vor den Seitenscheiben und ggf. der B-Säule des Fahrzeugs. Ein solcher Vorhang-Gassack weist naturgemäß eine relativ große Grundfläche auf. Hieraus ergibt sich das Problem, das in der Regel von einem einzigen Gasgenerator kommende Gas gleichmäßig in den Gassack einzuleiten.

Eine Vorhanggassack-Einheit weist eine großflächige Gassackhülle und einen Gasgenerator zur Befüllung der Gassackhülle auf. Die Gassackhülle hat eine obere Kante, die im Bereich des Dachholms des Kraftfahrzeugs befestigt ist, so dass sich die Längsrichtung des Gassacks entlang der Fahrzeuglängsachse erstreckt. Die Befüllung muss von der oberen Kante her erfolgen. Es sind hierzu zwei Konzepte bekannt:

### Stand der Technik

Beim ersten Konzept befindet sich der Gasgenerator an einem der beiden Enden der oberen Kante (zumeist dem hinteren) und vom Gasgenerator erstreckt sich eine lange, dünne, mehrere Austrittsöffnungen aufweisende Metalllanze ins Innere der Gassackhülle, welche das Gas über die Länge der Gassackhülle verteilt.

In einem zweiten Konzept weist die Gassackhülle im Bereich der oberen Kante zwischen dem vorderen und dem hinteren Ende einen Aufnahmebereich für den Gasgenerator auf, welcher sich in das Innere der Gassackhülle hinein erstreckt oder zumindest mit dem Inneren verbunden ist. Hierzu kann der Aufnahmebereich beispielsweise L-förmig ausgebildet sein.

Wenn gemäß des ersten Konzepts als Metallrohre ausgebildete Gasleitelemente eingesetzt werden, ergeben sich zumindest zwei Nachteile: Zum einen sind solche Rohre im Vergleich zu ihrer Länge relativ dünn, was sie sehr anfällig für Beschädigungen macht und damit für erhebliche Transportkosten beim Transport vom Hersteller zur Endmontage sorgt. Weiterhin ist die Baueinheit aus Gasgenerator und Gasleitelement nicht schubneutral und stellt deshalb eine Gefährdung dar.

Es ist deshalb schon der Vorschlag gemacht worden, Gasleitelemente aus Gewebe zu fertigen. Ein aus Gewebe bestehendes Gasleitelement ist beispielsweise in der JP 2002-187519 A beschrieben.

Ein Problem bei der Benutzung von rohrförmigen Gasleitelementen aus Gewebe ist, dass bei Verwendung schubneutraler zylindrischer Gasgeneratoren das heiße Gas zunächst unmittelbar auf die Innenwandung des Geweberohres trifft. Dies kann zu einem Versagen des Materials und somit zu einer Fehlfunktion des Gassacks führen.

Beim zweiten Konzept ergibt sich folgendes Problem: Es werden in der Regel zylindrische Gasgeneratoren eingesetzt, die aus Sicherheitsgründen schubneutral ausgebildet sind. Dies bedeutet, dass die Gasaustrittsöffnungen rotationssymmetrisch auf einem Teil der Mantelfläche des Gasgenerators angeordnet sind. Ohne zusätzliche Maßnahmen ergäbe sich hieraus das Problem, dass Gassackgewebe direkt von den heißen Gasen angestrahlt und gegebenenfalls beschädigt würde. Es werden deshalb Deflektoren eingesetzt, die das Gassackgewebe vor dem ausströmenden Gas schützen.

Aus der gattungsbildenden WO 02/079008 A1 ist ein solcher Deflektor bekannt, der in Form eines U-förmigen Metallbleches ausgeführt ist. Weiterhin ist aus dieser Druckschrift ein in die Gassackhülle eingenähtes Gasleitelement aus Gewebe bekannt.

Nachteilig an einem solchen Deflektorelement ist, dass sich die fertig montierte Gassackeinheit in einem Brandfall nicht schubneutral verhält. Im Falle eines Lagerbrandes verbrennt nämlich die aus Kunststoffgewebe bestehende Gassackhülle, der Gasgenerator und das mit dem Gasgenerator verbundenes Deflektorelement bleiben jedoch übrig. Um seinen Zweck, nämlich den Schutz des Gassackgewebes bei ausströmendem Gas erfüllen zu können, muss das Deflektorelement asymmetrisch aufgebaut sein. Hieraus folgt jedoch, dass sich die aus Gasgenerator und Deflektor bestehende Baugruppe nicht schubneutral verhält. Im Fall eines Lagerbrandes entsteht somit durch umherfliegende Gasgenerator-Deflektor-Baugruppen eine zusätzliche Gefahrenquelle.

### Gegenstand der Erfindung

Hiervon ausgehend stellt sich die vorliegende Erfindung die Aufgabe, ein rohrförmiges Gasleitelement, ein aus einem solchen rohrförmigen Gasleitelement und einem Gasgenerator bestehende Gaserzeugungs- und Zuführeinheit - insbesondere zur Verwendung in einer Vorhanggassack-Einheit - und eine Vorhanggassack-Einheit dahingehend weiterzubilden, dass sowohl hohe Funktionssicherheit als auch Schubneutralität im Brandfall gewährleistet ist.

Diese Aufgabe wird durch ein rohrförmiges Gasleitelement mit den Merkmalen des Anspruchs 1, durch eine Gaserzeugungs- und Zuführeinheit mit den Merkmalen des Anspruchs 11 und eine Vorhanggassack-Einheit mit den Merkmalen des Anspruchs 12 gelöst.

Erfindungsgemäß strömt das Gas von einem Gasgenerator zunächst in ein vollständig aus Gewebe bestehendes Gasleitelement beziehungsweise Deflektorelement. Dieses ist zumindest zweilagig ausgebildet, wobei die innere Lage die äußere Lage schützt und insbesondere Verbindungslinien wie Nähte, Klebe- oder Schweißlinien, die in die Umgebung außerhalb des Gasraumes des Gassacks reichen, abdecken.

In einer ersten Ausführungsform der Erfindung besteht das erfindungsgemäße rohrförmige Gasleitelement aus wenigstens zwei Gewebezuschnitten, wobei ein erster Gewebezuschnitt eine rohrförmige Außenhülle bildet. Innerhalb des aus dem ersten Zuschnitt gebildeten Rohres ist ein zweiter Gewebezuschnitt angeordnet, der zumindest den Bereich, in dem die beiden Längskanten des ersten Zuschnitts miteinander verbunden sind, abdeckt. Es hat sich nämlich herausgestellt, dass der kritischste Bereich eines aus Gewebe bestehenden Gaselements derjenige ist, in den Gas radial auf eine Naht trifft.

Vorzugsweise sind die beiden Gewebezuschnitte Rechtecke, die zunächst zu einem L verbunden werden. Anschließend wird der Gasgenerator in den oben liegenden zweiten Zuschnitt eingewickelt; abschließend werden die beiden Längskanten des ersten Gewebezuschnitts miteinander verbunden, vorzugsweise vernäht. Hierdurch weist der zweite Zuschnitt, der den Gasgenerator vorzugsweise vollständig umschlingt, zumindest im Bereich der Ausströmöffnungen des Gasgenerators keine Naht auf, so dass ein direktes Anströmen einer Naht im Bereich der Ausströmöffnungen verhindert wird.

In einer zweiten Ausführungsform der Erfindung besteht das Deflektorelement einer Gassackeinheit ebenfalls - vorzugsweise vollständig - aus Gewebe und brennt deshalb im Brandfall gemeinsam mit der Gassackhülle ab, beziehungsweise verliert seine Festigkeit, so dass das Gas aus dem schubneutralen Gasgenerator direkt in die Umgebung entweichen kann. Das Deflektorelement ist, wie der Gasgenerator auch, zylinderförmig ausgebildet, wird aus einem flächigen Gewebezuschnitt zylinderförmig gefaltet und durch eine erste Verbindungsline, welche zumeist als Verbindungsnaht ausgeführt ist, zusammengehalten. Das Deflektorelement wird mit der Gassackhülle über eine Befestigungsnaht verbunden. Um eine über die Dauer des Gasaustritts hinreichende Widerstandsfähigkeit zu gewährleisten, ist das Deflektorelement zweilagig mit einer inneren und einer äußeren Lage ausgebildet. Hierbei deckt die innere Lage die erste Verbindungslinie ab.

Vorteilhafte Ausführungen ergeben sich aus den Unteransprüchen und aus den nun mit Bezug auf die Figuren näher erläuterten Ausführungsbeispielen. Hierbei zeigen:

### Kurzbeschreibung der Zeichnungen

- Figur 1: Einen ersten und einen zweiten Gewebezuschnitt, die zu einem L zusammengefügt sind,
- Figur 2: ein Gasleitelement mit darin aufgenommenem Gasgenerator,
- Figur 3: einen Schnitt entlang der Linie A-A aus Figur 2,
- Figur 4: eine schematische Darstellung eines Gasgenerators, und
- Figur 5: eine Vorhanggassack-Einheit,
- Figur 6: einen Längsschnitt durch eine Vorhanggassack-Einheit nach einem ersten Ausführungsbeispiel,
- Figur 7: Zuschnitte für eine innere Lage und eine äußere Lage des im ersten Ausführungsbeispiel verwendeten Deflektorelements,
- Figur 8: die mittels einer zweiten Verbindungsnaht verbundenen beiden La- gen des Deflektorelements,
- Figur 9: einen Schnitt durch das fertig vernähte Deflektorelement einschließ- lich dessen erster Verbindungsnaht,
- Figur 10: das Deflektorlelement aus Figur 4 in einer perspektivischen Darstel- lung,
- Figur 11: Zuschnitte für eine innere und eine äußere Lage eines Deflektorele- ments nach einem zweiten Ausführungsbeispiel,
- Figur 12: die beiden Zuschnitte aus Figur 6, die mittels einer Verbindungsnaht miteinander verbunden sind,
- Figur 13: einen Schnitt durch das Deflektorelement nach einem zweiten Aus- führungsbeispiel und
- Figur 14: Deflektorelement und Gassackhülle nach einem zweiten Ausfüh- rungsbeispiel in einer perspektivischen Darstellung.

### Beschreibung bevorzugter Ausführungsformen

### Erste Ausführungsform

In der ersten Ausführungsform der Erfindung erstreckt sich ein rohrförmiges Gasleitelement im wesentlichen über die gesamte Länge des Vorhanggassack und der Gasgenerator befindet sich an einem Ende des Vorhanggassacks außer desselben.

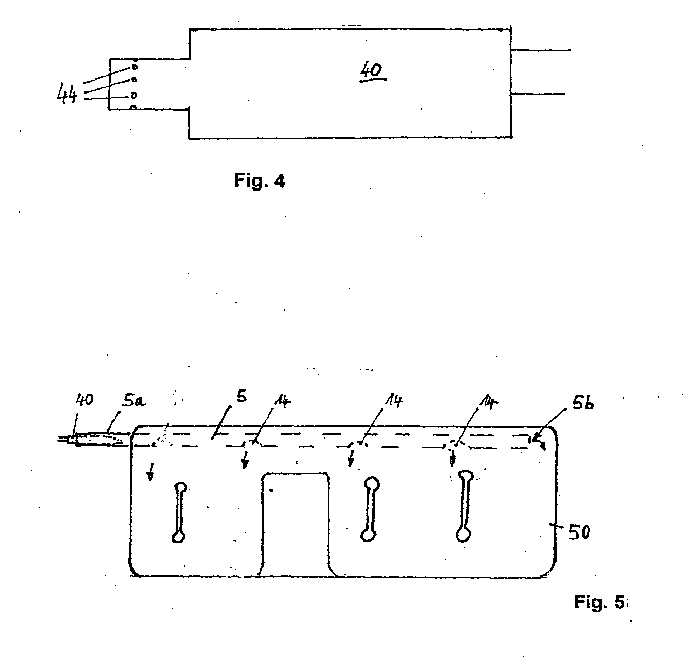

Figur 5 zeigt eine Vorhanggassack-Einheit. Diese besteht aus dem Vorhanggassack 50, dem Gasgenerator 40 und dem rohrförmigen Gasleitelement 5, in dessen erstem Ende 5a der Gasgenerator 40 aufgenommen ist. Wird der Gasgenerator 40 betätigt, so strömt Gas in das rohrförmige Gasleitelement 5 und strömt aus dessen zweitem Ende 5b und durch die Durchbrechungen 14 aus dem rohrförmigen Gasleitelement 5 heraus und in das Innere des Vorhanggassacks 50 hinein.

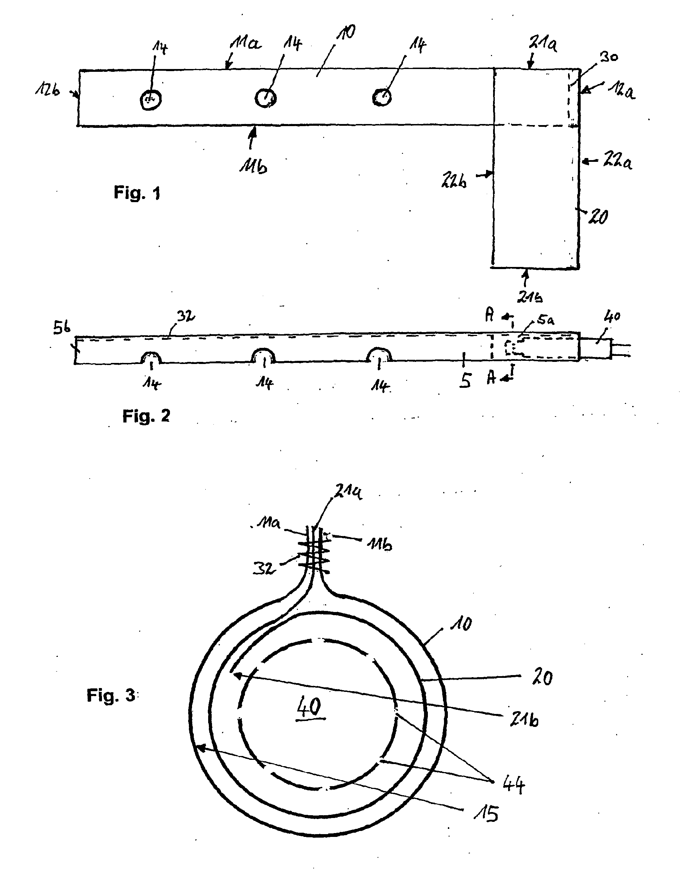

Das rohrförmige Gasleitelement 5 besteht aus Gewebe. Es ist aus zwei Gewebezuschnitten 10,20 hergestellt, wie dies in den Figur 1, 2 und 3 dargestellt ist. Beide Gewebezuschnitte 10,20 sind Rechtecke mit ersten Kanten 11a,b und 12a,b bzw. 21a,b und 22a,b. Die ersten Kanten 11a,b des ersten Gewebezuschnitts 10 sind die Längskanten dieses Gewebezuschnitts. Sie sind in der Regel um ein Vielfaches länger als die zweiten Kanten 12a,b. Innerhalb des ersten Gewebezuschnitts 10 befinden sich weiterhin die Durchbrechungen 14.

In einem ersten Montageschritt wird der zweite Gewebezuschnitt 20 am ersten Gewebezuschnitt 10 befestigt. Dies kann beispielsweise mittels der Montagenaht 30 geschehen. Wie man sieht, ist die erste dritte Kante 21 a des zweiten Gewebezuschnitts 20 kollinear bezüglich der ersten ersten Kante 11a des ersten Gewebezuschnitts 10. Ebenso ist die erste vierte Kante 22a abschnittsweise kollinear zur ersten zweiten Kante 12a des ersten Gewebezuschnitts 10. Die beiden miteinander verbundenen Gewebezuschnitte bilden somit ein L.

Im nächsten Montageschritt wird ein Gasgenerator 40, wie er schematisch in Figur 4 abgebildet ist, in den zweiten Gewebezuschnitt 20 eingewickelt. Da die dritten Kanten 21a,b des zweiten Gewebezuschnitts 20 länger als die zweiten Kanten 12a,b des ersten Gewebezuschnitts 10 sind, ist die Mantelfläche des Abschnitts des Gasgenerators 40, der in das Gasleitelement 5 hineinragt, vollständig vom zweiten Gewebezuschnitt 20 umgeben, so dass es keine Berührung zwischen Gasgenerator 40 und erstem Gewebezuschnitt 10 gibt.

Abschließend wird der erste Gewebezuschnitt 10 zu einem Rohr zusammengelegt und die ersten Kanten 11a,b mittels der Verbindungsnaht 32 miteinander verbunden. Hierbei wird der erste Gewebezuschnitt 10 so umgeschlagen beziehungsweise gefaltet, dass durch das Vernähen mittels der Verbindungsnaht 32 die erste Oberfläche 15 des ersten Gewebezuschnitts 10 abschnittsweise miteinander in Kontakt kommt. Im Bereich des ersten Endes 5a des rohrförmigen Gasleitelements 5 ist die erste dritte Kante 21 a des zweiten Gewebezuschnitts 20 zwischen die beiden ersten Kanten 11a,b des ersten Gewebezuschnitts 10 aufgenommen. Alternativ kann der zweite Gewebeabschnitt auch nur mit der Montagenaht am ersten Gewebeabschnitt befestigt sein.

Durch diesen Montagevorgang ergibt sich das in den Figuren 2 und 3 Gezeigte, wobei die Figur 3 einen Schnitt entlang der Ebene A-A aus Figur 2 ist. Wie man anhand Figur 3 sieht, ist der durch die Verbindungsnaht 32 gebildete Verbindungsbereich zwischen den ersten Kanten 11a im Bereich des Gasgenerators vollständig vom zweiten Gewebezuschnitt 20 abgedeckt. Die zweite dritte Kante 21 b des zweiten Gewebezuschnitts 20 befindet sich nahtfrei innerhalb des rohrförmigen Gasleitelements 5, so dass das radial aus den Ausströmöffnungen 44 des Gasgenerators 40 kommende Gas auf keine Naht trifft.

Alternativ zu dem oben beschriebenen Montageablauf kann es vorteilhaft sein, zunächst den ersten und zweiten Gewebeabschnitt 10,20 miteinander in beschriebener Weise zu verbinden und anschließend den Gasgenerator 40 mit dem ersten Ende 5a des Gasleitelements zu verbinden. Dadurch kann ein Nähvorgang mit eingesetztem Gasgenerator vermieden werden.

Die Erfindung wurde hier in Bezug auf einen Vorhang-Gassack erläutert, es ist jedoch klar, dass ein erfindungsgemäßes rohrförmiges Gasleitelement auch bei einem anderen Gassack-Typ, beispielsweise einem Seitengassack, eingesetzt werden kann.

### Zweite Ausführungsform

In der nun beschriebenen zweiten Ausführungsform ist ein Gasgenerator im wesentlichen in der Mitte der Oberkante eines Vorhanggassackes angeordnet. Hierbei ist zumindest der Ausströmbereich des Gasgenerators von einem zumindest zweilagigen aus Gewebe bestehenden Deflektorelement umgeben.

### Erstes Ausführungsbeispiel

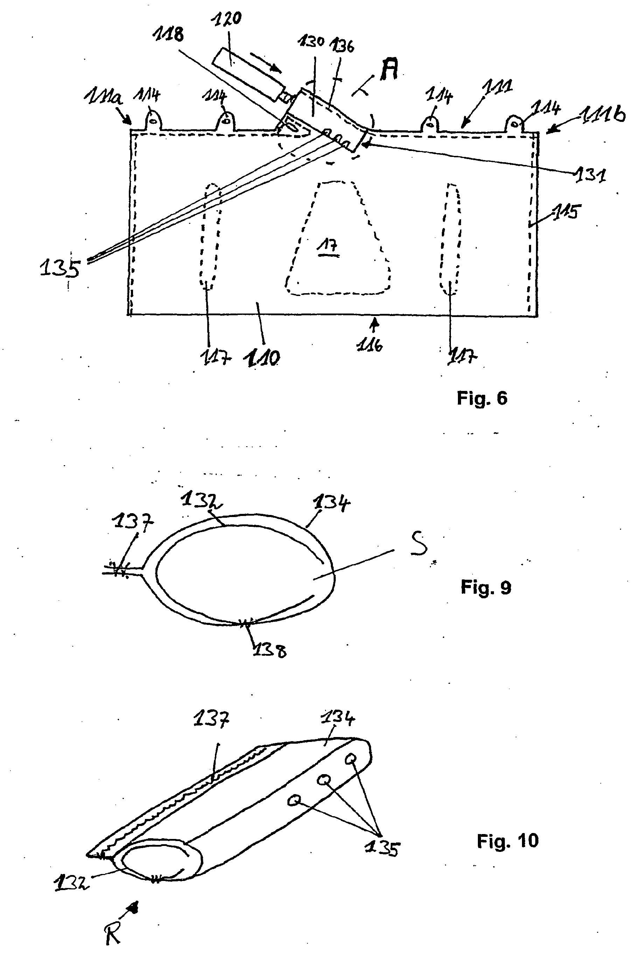

Die Figur 6 zeigt eine Vorhanggassack-Einheit in einem Längsschnitt. Die Vorhanggassack-Einheit weist eine Gassackhülle 110 mit einer oberen Kante 111 auf, an welcher sich Befestigungslaschen 114 zur Befestigung der Gassackhülle in einer Fahrzeugstruktur befinden. Die Gassackhülle 110 ist aus einem einstükkigen Zuschnitt hergestellt, welcher an der unteren Kante 116 gefaltet und über die Umfangsnaht 115 mit sich selbst vernäht ist. Die Gassackhülle 110 weist nicht aufblasbare Bereiche 117 auf, die durch Trennnähte vom Gasraum getrennt sind.

Die obere Kante 111 erstreckt sich vom hinteren Ende 111 a zum vorderen Ende 11 b. Im Bereich der oberen Kante 111 zwischen dem hinteren Ende 111 a und dem vorderen Ende 111 b - hier im wesentlichen in der Mitte - befindet sich der Aufnahmebereich A für den Gasgenerator 120 (hier im nicht montierten Zustand dargestellt). Im Aufnahmebereich A befindet sich weiterhin die Befestigungsöffnung 118, durch die eine Rohrschelle geführt werden kann, mittels der der Gasgenerator 120 an der Gassackhülle 110 festgeklemmt wird.

Im Aufnahmebereich ist das aus Gewebe bestehende Deflektorelement 130 angeordnet und über die Befestigungsnaht 136 mit der Gassackhülle vernäht. Die Befestigungsnaht 136 fällt in diesem Bereich mit der Umfangsnaht 115 zusammen. Das Deflektorelement 130 ist rohrförmig mit zwei offenen Stirnseiten ausgebildet und bildet zumindest dann, wenn der zylindrische Gasgenerator montiert ist, einen zylinderförmigen Körper aus. Durch die vordere Stirnseite 131 und die radialen Durchbrechungen 135 strömt das Gas in einem axialen Gasstrom und einem radialen Gasstrom in den Gasraum der Gassackhülle. Das Deflektorelement 30 übernimmt somit die weitere Aufgabe eines Gasleitelements.

Im vernähten, aber noch nicht im Fahrzeug montierten Zustand steht die Achse des zylinderförmigen Deflektorelements, welches sich in diesem Ausführungsbeispiel vollständig innerhalb der Gassackhülle 110 und unterhalb der oberen Kante 111 befindet, schräg bezüglich der oberen Kante 111 der Gassackhülle 110. Dies hat zum einen den Vorteil, dass der Zuschnitt für die Gassackhülle eine einfache Geometrie aufweisen kann. Weiterhin können sich hierdurch Vorteile hinsichtlich der Krafteinleitung bei Betätigung des Gasgenerators ergeben.

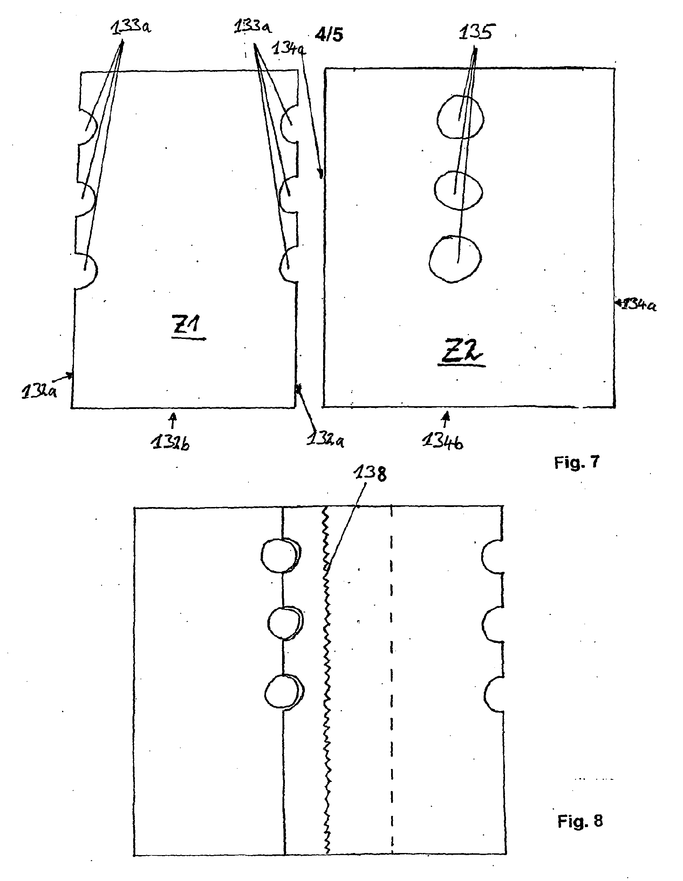

Der Aufbau des Deflektorelements 130 wird nun mit Bezug auf die Figuren 7 bis 10 näher erläutert:

Die Figur 7 zeigt die beiden Zuschnitte Z1 und Z2. Aus dem ersten Zuschnitt Z1 entsteht hierbei die innere Lage des Deflektorelements 130, aus dem zweiten Zuschnitt Z2 die äußere Lage 134. Wie man sieht, weist der erste Zuschnitt Z1 seitliche Einbuchtungen 133a auf, die in fertig montiertem Zustand Bestandteil der radialen Öffnung 133 sind. Der Zuschnitt Z2 weist Löcher 135a auf, die im vernähten Zustand die radialen Durchbrechungen 135 bilden.

In einem in Figur 8 dargestellten ersten Arbeitsschritt werden die beiden Zuschnitte Z1 und Z2 mittels der zweiten Verbindungsnaht 138 miteinander vernäht. Hierbei wird der erste Zuschnitt Z1 auf den zweiten Zuschnitt Z2 genäht und zwar derart, dass die Einbuchtungen 133a der einen Längskante 32a deckungsgleich zu den Löchern 135a sind. Anschließend wird der erste Zuschnitt Z1 eingerollt und die beiden Längskanten 134a der äußeren Lage aufeinander gelegt und mit der ersten Verbindungsnaht 137 gesichert. Das Defelektorelement 130 wird dann mit der Befestigungsnaht 136, die in diesem Bereich auch die Umfangsnaht 115 sein kann, mit der Gassackhülle 110 vernäht. Um dies erreichen zu können, muss die zweite Kante 134b des zweiten Zuschnitts Z2 länger als die zweite Kante 132b des ersten Zuschnitts Z1 sein. Anstatt die erste Verbindungsnaht 137 und die Befestigungsnaht 136 getrennt auszubilden, können diese auch durch eine einzige Naht ausgebildet sein.

Es ergibt sich somit das in den Figuren 9 und 10 Gezeigte (wobei die Gassackhülle selbst nicht dargestellt ist). Hierbei ist Figur 9 eine Aufsicht auf Figur 10 aus Richtung R. Die Längskanten 132a der inneren Lage 132 werden nicht miteinander vernäht, so dass sich ein durchgehender radialer Schlitz S ergibt, der zusammen mit den Einbuchtungen 33a die radiale Öffnung bildet.

Die zweite Verbindungsnaht 138 wird zwar stellenweise direkt vom Gasstrom getroffen, ein stellenweises Versagen dieser Naht ist jedoch unschädlich, da auch in diesem Fall kein Gas verloren geht, innere und äußere Lage miteinander verbunden bleiben und die erste Verbindungsnaht 137 von der inneren Lage 132 abgedeckt bleibt.

### Zweites Ausführungsbeispiel

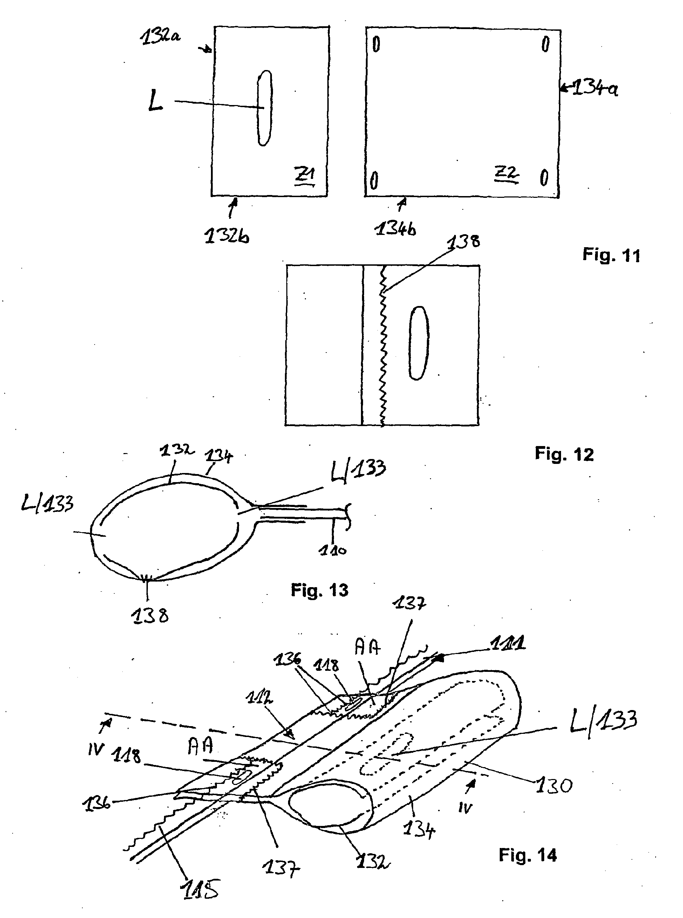

Die Figuren 11 bis 14 zeigen ein zweites Ausführungsbeispiel einer Vorhanggassack-Einheit bzw. eines Deflektorelements.

Wie im ersten Ausführungsbeispiel auch, werden innere Lage 132 und äußere Lage 134 des Deflektorelements 130 jeweils aus einem Zuschnitt Z1,Z2 hergestellt. Der zweite Zuschnitt Z2 zeigt hierbei keine Durchbrechung, während im ersten Zuschnitt Z1 ein Langloch L angeordnet ist (siehe Figur 11).

Wie man Figur 12 entnehmen kann, werden erster Zuschnitt Z1 und zweiter Zuschnitt Z2 wie im ersten Ausführungsbeispiel mittels einer zweiten Verbindungsnaht 138 zusammengenäht. Der erste Zuschnitt Z1 wird eingerollt und der zweite Zuschnitt Z2 an den äußeren Abschnitten AA seiner Längskanten 134a über die erste Verbindungsnaht 137 mit sich vernäht. Im Bereich der oberen Kante 111 der Gassackhülle 110 wird das Deflektorelement 130 mit dieser vernäht. Hierzu dienen die Befestigungsnähte 136. Dies ist in den Figuren 13 und 14 dargestellt, wobei die Figur 13 ein Schnitt durch die Figur 14 entlang der Linie IV-IV ist.

In den Bereichen der äußeren Abschnitte AA ist auch jeweils eine Befestigungsöffnung 118 für eine Schlauchschelle vorgesehen. Der Gasgenerator wird durch Schlauchschellen gehalten und es erfolgt durch das Anpressen der beiden Gewebelagen 132, 134 auf die Mantelfläche des Gasgenerators eine Gasabdichtung in axialer Richtung.

Anders als im ersten Ausführungsbeispiel befindet sich das aus der inneren Lage 132 und der äußeren Lage 134 gebildete Deflektorelement 130 oberhalb der oberen Kante 111, also vollständig außerhalb der Gassackhülle 110. Der nicht dargestellte Gasgenerator 120 erstreckt sich vollständig durch das Deflektorelement 130 hindurch. Bei Betätigung des Gasgenerators strömt das Gas durch das Langloch L, welches die radiale Öffnung 133 der inneren Lage 132 bildet, durch den Öffnungsbereich zwischen äußerer Lage 134 und Gassackhülle 110 in den Gasraum der Gassackhülle. Alternativ kann es vorgesehen sein, eine zusätzliche Gewebetasche mit der oberen Kante 111 der Gassackhülle 110 zu verbinden, die das Deflektorelement zumindest zum Teil einschließt, um eventuell auftretende Leckageverluste in die Umgebung zu vermeiden.

### Bezugszeichenliste

- 5: Gasleitelement
- 5a: erstes Ende
- 5b: zweites Ende
- 10: erster Gewebezuschnitt
- 11a,b: erste Kanten
- 12a,b: zweite Kanten
- 14: Durchbrechung
- 20: zweiter Gewebezuschnitt
- 21a,b: dritte Kanten
- 22a,b: vierte Kanten
- 30: Montagenaht
- 32: Verbindungsnaht
- 40: Gasgenerator
- 42: vorderer Abschnitt
- 44: Ausstömöffnungen
- 50: Vorhanggassack
- 110: Gassackhülle
- 111: obere Kante
- 111 a: hinteres Ende
- 111 b: vorderes Ende
- 112: Öffnungsbereich
- 114: Befestigungslaschen
- 115: Umfangsnaht
- 116: gefaltete Kante
- 117: nicht aufblasbarer Bereich
- 118: Befestigungsöffnung
- 120: Gasgenerator
- 130: Deflektorelement
- 131: Stirnseite
- 132: innere Lage
- 132a: Längskante
- 132b: zweite Kante
- 133: radiale Öffnung
- 133a: Einbuchtung
- 134: äußere Lage
- 132a: Längskante
- 132b: zweite Kante
- 135: radiale Durchbrechung
- 135a: Loch
- 136: Befestigungsnaht
- 137: erste Verbindungsnaht
- 138: zweite Verbindungsnaht
- A: Aufnahmebereich
- AA: äußerer Abschnitt
- S: Schlitz
- Z1: erster Zuschnitt
- Z2: zweiter Zuschnitt

## Patentansprüche

1. Rohrförmiges Gasleitelement (5) zur Leitung des von einem Gasgenarator kommenden Gases in den Gasraum eines Gassacks (50) bestehend aus:
- einem ersten Gewebezuschnitt (10) mit zwei im wesentlichen zueinander parallelen ersten Kanten (11a,11b), welche miteinander verbunden sind, sodass der erste Zuschnitt die Außenhülle eines Rohres bildet,
- einem zweiten Gewebezuschnitt (20), wobei
- die beiden Gewebezuschnitte derart miteinander verbunden sind, dass der zweite Gewebezuschnitt (20) innerhalb des durch den ersten Gewebezuschnitt (10) gebildeten Rohres liegt und zumindest den Verbindungsbereich zwischen den beiden ersten Kanten (11 a,11 b) zumindest abschnittsweise abdeckt.

2. Rohrförmiges Gasleitelement nach Anspruch 1, **dadurch gekennzeichnet, dass** der erste Gewebezuschnitt (10) ein Rechteck mit zwei ersten und zwei zweiten Kanten (11a,11b;12a,12b) ist.

3. Rohrförmiges Gasleitelement nach Anspruch 1 oder Anspruch 2, **dadurch gekennzeichnet, dass** der zweite Gewebezuschnitt (20) ein Rechteck mit zwei dritten und zwei vierten (21 a,21 b;22a,22b) Kanten ist.

4. Rohrförmiges Gasleitelement nach Anspruch 2 und Anspruch 3, **dadurch gekennzeichnet, dass** erste und dritte Kanten parallel zueinander sind.

5. Rohrförmiges Gasleitelement nach Anspruch 4, **dadurch gekennzeichnet, dass** erste und dritte Kante aufeinanderliegen.

6. Rohrförmiges Gasleitelement nach Anspruch 5, **dadurch gekennzeichnet, dass** auch zweite und vierte Kante aufeinanderliegen.

7. Rohrförmiges Gasleitelement nach den Ansprüchen 2 und 3 oder einem der Ansprüchen 4 bis 6, **dadurch gekennzeichnet, dass** die vierten Kanten (22a,22b) länger als die zweiten Kanten (12a,12b) sind.

8. Rohrförmiges Gasleitelement nach einem der vorangehenden Ansprüche, **dadurch gekennzeichnet, dass** die beiden ersten Kanten derart miteinander vernäht sind, dass sich im Nahtbereich dieselbe Oberfläche des ersten Zuschnitts gegenüberliegt.

9. Rohrförmiges Gassleitelement nach Anspruch 6, 7 und 8, **dadurch gekennzeichnet, dass** die dritte Kante zwischen die beiden ersten Kanten eingenäht ist.

10. Rohrförmiges Gasleitelement nach einem der vorangehenden Ansprüche, **dadurch gekennzeichnet, dass** im ersten Zuschnitt Durchbrechungen vorgesehen sind.

11. Gaserzeugungs- und Zuführeinheit bestehend aus einem rohrförmigen Gasleitelement (5) nach einem der Ansprüche 1 bis 10 und einem im wesentlichen zylindrischen Gasgenerator (44), der in einem Ende des rohrförmigen Gasleitelements aufgenommen ist.

12. Vorhanggassack-Einheit mit einem Gasgenerator (120) und einer Gassackhülle (110) mit einer sich von einem vorderen Ende (111 b) zu einem hinteren Ende (111 a) erstreckenden oberen Kante (111), wobei sich in einem zwischen dem vorderen und dem hinteren Ende befindenden Bereich der oberen Kante ein Aufnahmebereich (A) für den Gasgenerator (120) befindet, in welchem ein den Gasgenerator zumindest abschnittsweise aufnehmendes Defelektorelement (130) für das vom Gasgenerator kommende Gas angeordnet ist,
**dadurch gekennzeichnet, dass**
- das Deflektorelement (130) aus Gewebe besteht, welches zu einem zylinderförmigen Körper gefaltet ist und von einer ersten Verbindungslinie zusammengehalten wird, und
- das Deflektorelement wenigstens zweilagig mit einer inneren und einer äußeren Lage (132,134) ausgebildet ist, wobei die innere Lage (132) die erste Verbindungslinie abdeckt.

13. Vorhanggassack-Einheit nach Anspruch 12, **dadurch gekennzeichnet, dass** die erste Verbindungslinie als erste Verbindungsnaht (137), Klebe- oder Schweißverbindung ausgeführt ist.

14. Vorhanggassack-Einheit nach Anspruch 12 oder Anspruch 13, **dadurch gekennzeichnet, dass** das Deflektorelement (130) vollständig aus Gewebe besteht.

15. Vorhanggassack-Einheit nach Anspruch 12, 13 oder 14, **dadurch gekennzeichnet, dass** die innere Lage wenigstens eine radiale Öffnung (133) aufweist.

16. Vorhanggassack-Einheit nach Anspruch 15, **dadurch gekennzeichnet, dass** die äußere Lage wenigstens eine radiale Durchbrechung (135) aufweist.

17. Vorhanggasack-Einheit nach einem der Ansprüche 12 bis 16, **dadurch gekennzeichnet, dass** die Achse des rohrförmigen Deflektorelements im vollständig vernähten, jedoch unmontierten Zustand schräg bezüglich der Oberkante (111) der Gassackhülle verläuft.

18. Vorhanggassack-Einheit nach einem der Ansprüche 12 bis 17, **dadurch gekennzeichnet, dass** sich das Deflektorelement (130) zumindest abschnittsweise innerhalb der Gassackhülle und unterhalb der Oberkante befindet.

19. Vorhanggassack-Einheit nach einem der Ansprüche 12 bis 17, **dadurch gekennzeichnet, dass** sich das Deflektorelement (130) oberhalb der oberen Kante (111) befindet.

## Claims

1. Tubular gas guiding element (5) for guiding the gas from a gas generator into the gas chamber of a gas bag (50), comprising:
- a first woven fabric section (10) having two first edges (11a, 11b) which are essentially parallel to one another and connected to one another so that the first section forms the outer sleeve of a tube,
- a second woven fabric section (20), wherein
- the two woven fabric sections are connected to one another such that the second woven fabric section (20) lies within the tube formed by the first woven fabric section (10) and at least partially covers at least the connection region between the two first edges (11a, 11b).

2. Tubular gas guiding element according to claim 1, **characterised in that** the first woven fabric section (10) is a rectangle having two first and two second edges (11a, 11b; 12a, 12b).

3. Tubular gas guiding element according to claim 1 or claim 2, **characterised in that** the second woven fabric section (20) is a rectangle with two third and two fourth edges (21a, 21b; 22a, 22b).

4. Tubular gas guiding element according to claim 2 and claim 3, **characterised in that** first and third edges are parallel to one another.

5. Tubular gas guiding element according to claim 4, **characterised in that** first and third edges lie over one another.

6. Tubular gas guiding element according to claim 5, **characterised in that** second and fourth edges also lie over one another.

7. Tubular gas guiding element according to claims 2 and 3 or one of the claims 4 to 6, **characterised in that** the fourth edges (22a, 22b) are longer than the second edges (12a, 12b).

8. Tubular gas guiding element according to one of the preceding claims, **characterised in that** the two first edges are sewn to one another such that in the seam region, the same surface of the first section lies opposing itself.

9. Tubular gas guiding element according to claim 6, 7 and 8, **characterised in that** the third edge is sewn between the two first edges.

10. Tubular gas guiding element according to one of the preceding claims, **characterised in that** perforations are provided in the first section.

11. Gas generating and feeding unit comprising a tubular gas guiding element (5) according to one of the claims 1 to 10 and an essentially cylindrical gas generator (44), which is accommodated in one end of the tubular gas guiding element.

12. Suspended gas bag unit comprising a gas generator (120) and a gas bag sleeve (110) having an upper edge (111) extending from a front end (111b) to a rear end (111a), wherein an accommodating region (A) for the gas generator (120) is situated in a region between the front and rear ends of the upper edge, in which accommodating region a deflector element (130) for the gas coming from the gas generator and at least partially accommodating the gas generator is arranged, **characterised in that**
- the deflector element (130) comprises woven fabric which is folded into a cylindrical body and is held together by a first connecting line, and
- the deflector element is configured at least two-layered with an inner and an outer layer (132, 134), wherein the inner layer (132) covers the first connecting line.

13. Suspended gas bag unit according to claim 12, **characterised in that** the first connecting line is configured as a first connecting seam (137), glued connection or welded connection.

14. Suspended gas bag unit according to claim 12 or 13, **characterised in that** the deflector element (130) is made entirely from woven fabric.

15. Suspended gas bag unit according to claim 12, 13 or 14, **characterised in that** the inner layer comprises at least one radial aperture (133).

16. Suspended gas bag unit according to claim 15, **characterised in that** the outer layer comprises at least one radial perforation (135).

17. Suspended gas bag unit according to one of the claims 12 to 16, **characterised in that** the axis of the tubular deflector element in the completely sewn but unmounted condition extends obliquely relative to the upper edge (111) of the gas bag sleeve.

18. Suspended gas bag unit according to one of the claims 12 to 17, **characterised in that** the deflector element (130) is situated at least partially within the gas bag sleeve and beneath the upper edge.

19. Suspended gas bag unit according to one of the claims 12 to 17, **characterised in that** the deflector element (130) is situated above the upper edge (111).

## Revendications

1. Élément tubulaire de guidage du gaz (5) pour guider le gaz sortant d'un générateur de gaz dans le compartiment à gaz d'un sac gonflable (50), formé par :
■ une première découpe en tissu (10) avec deux premiers bords (11a, 11b) sensiblement parallèles entre eux, qui sont assemblés entre eux de telle sorte que la première découpe forme l'enveloppe extérieure d'un tube,
■ une deuxième découpe en tissu (20), dans lequel
■ les deux découpes en tissu sont assemblées l'une à l'autre, de telle sorte que la deuxième découpe en tissu (20) se situe à l'intérieur du tube formé par la première découpe en tissu (10), et masquent, au moins par zones, au moins la zone de liaison entre les deux premiers bords (11a, 11b).

2. Élément tubulaire de guidage du gaz selon la revendication 1, **caractérisé en ce que** la première découpe en tissu (10) est un rectangle avec deux premiers bords et deux deuxièmes bords (11a, 11b ; 12a, 12b).

3. Élément tubulaire de guidage du gaz selon la revendication 1 ou la revendication 2, **caractérisé en ce que** la deuxième découpe en tissu (20) est un rectangle avec deux troisièmes bords et deux quatrièmes bords (21a, 21b ; 22a, 22b).

4. Élément tubulaire de guidage du gaz selon la revendication 2 et la revendication 3, **caractérisé en ce que** des premiers et des troisièmes bords sont parallèles entre eux.

5. Élément tubulaire de guidage du gaz selon la revendication 4, **caractérisé en ce que** des premiers et des troisièmes bords sont disposés l'un sur l'autre.

6. Élément tubulaire de guidage du gaz selon la revendication 5, **caractérisé en ce que** des deuxièmes et des quatrièmes bords sont également disposés l'un sur l'autre.

7. Élément tubulaire de guidage du gaz selon les revendications 2 et 3 ou selon l'une quelconque des revendications 4 à 6, **caractérisé en ce que** les quatrièmes bords (22a, 22b) sont plus longs que les deuxièmes bords (12a, 12b).

8. Élément tubulaire de guidage du gaz selon l'une quelconque des revendications précédentes, **caractérisé en ce que** les deux premiers bords sont cousus l'un à l'autre de telle sorte que la même surface de la première découpe se fait face dans la zone de la couture.

9. Élément tubulaire de guidage du gaz selon les revendications 6, 7 et 8, **caractérisé en ce que** le troisième bord est cousu entre les deux premiers bords.

10. Élément tubulaire de guidage du gaz selon l'une quelconque des revendications précédentes, **caractérisé en ce que** des trous débouchants sont prévus dans la première découpe.

11. Unité de production et d'acheminement de gaz formée par un élément tubulaire de guidage du gaz (5) selon l'une quelconque des revendications 1 à 10, et un générateur de gaz (44) sensiblement cylindrique, qui est logé dans une extrémité de l'élément tubulaire de guidage du gaz.

12. Unité de sac gonflable du type rideau, comportant un générateur de gaz (120) et une enveloppe (110) de sac gonflable avec un bord supérieur (111) s'étendant depuis une extrémité avant (111b) vers une extrémité arrière (llla), dans laquelle dans une zone du bord supérieur, située entre l'extrémité avant et l'extrémité arrière, se situe une zone de réception (A) pour le générateur de gaz (120), dans laquelle est disposé au moins un déflecteur (130) pour le gaz sortant du générateur de gaz, lequel déflecteur reçoit au moins par zones le générateur de gaz,
**caractérisée en ce que**
■ le déflecteur (130) est réalisé en tissu, qui est plié pour former un corps cylindrique et qui est maintenu ensemble par une première ligne d'assemblage, et
■ le déflecteur (130) est réalisé au moins en deux couches avec une couche intérieure (132) et une couche extérieure (134), la couche intérieure (132) masquant la première ligne d'assemblage.

13. Unité de sac gonflable du type rideau selon la revendication 12, **caractérisée en ce que** la première ligne d'assemblage, formant une première couture d'assemblage (137), est réalisée par un assemblage collé ou un assemblage soudé.

14. Unité de sac gonflable du type rideau selon la revendication 12 ou la revendication 13, **caractérisée en ce que** le déflecteur (130) est entièrement réalisé en tissu.

15. Unité de sac gonflable du type rideau selon la revendication 12, 13 ou 14, **caractérisée en ce que** la couche intérieure comporte au moins une ouverture radiale (133).

16. Unité de sac gonflable du type rideau selon la revendication 15, **caractérisée en ce que** la couche extérieure comporte au moins un passage radial (135).

17. Unité de sac gonflable du type rideau selon l'une quelconque des revendications 12 à 16, **caractérisée en ce que** l'axe du déflecteur tubulaire, à l'état entièrement cousu, mais non monté, s'étend en oblique par rapport au bord supérieur (111) de l'enveloppe du sac gonflable.

18. Unité de sac gonflable du type rideau selon l'une quelconque des revendications 12 à 17, **caractérisée en ce que** le déflecteur (130) se situe au moins par zones à l'intérieur de l'enveloppe du sac gonflable et en dessous du bord supérieur.

19. Unité de sac gonflable du type rideau selon l'une quelconque des revendications 12 à 17, **caractérisée en ce que** le déflecteur (130) se situe au-dessus du bord supérieur (111).
